# EUROPEAN PATENT SPECIFICATION

(11) **EP 1 718 516 B1**
(45) Date of publication and mention of the grant of the patent: **04.08.2010**
(21) Application number: 05710975.3
(22) Date of filing: 18.02.2005
(51) Int. Cl.: B62K 21/16

(54) **STEERING APPARATUS FOR BICYCLES**
LENKVORRICHTUNG FÜR FAHRRÄDER
DISPOSITIF DE DIRECTION POUR BICYCLETTES

(30) Priority: 18.02.2004 NZ 52766904
(43) Date of publication of application: 08.11.2006
(73) Proprietor: Syrotech Limited, Hamilton (NZ)
(72) Inventor: VERSEY, Robert, Joseph, Montague, Hamilton (NZ)
(74) Representative: Tomkinson, Alexandra
(86) International application number: PCT/NZ2005/000024
(87) International publication number: WO 2005/077741

(56) References cited:
- WO-A1-00/01572
- FR-A1- 2 816 276
- NL-C1- 1 007 578
- US-A- 610 469
- US-A- 3 863 521
- US-A- 4 023 436
- US-A- 5 144 859
- US-A- 5 555 775

## Description

### Technical Field

This invention relates to improvements to steering apparatus.

More specifically, the present invention relates to improvements to steering devices and vehicle controls including cycle handlebars. It should however, be appreciated that the principles of the present invention may apply to other steering devices.

### Background Art

Cycling is a recreational activity and in terms of sporting activities, is very popular. Cycling features in major sporting events such as the Olympics, Commonwealth Games and at world, national, and regional events.

Over recent years the sport of cycle racing has been combined with other sports like running, swimming, mountain biking, and kayaking in stages to create one continuous multi-stage race. Some examples of this form of racing are Triathlon, Duathlon, X-Terra, and multi-sport races. From such races has evolved specialised bicycles that incorporate many new innovations, many of which have subsequently been adopted by the road cycling fraternity world-wide.

There is, however, one feature that is common to all forms of cycling and that is the way that a rider controls a bicycle. The legs supply the energy and power to provide forward motion through a variable ratio drive train, and the hands control direction, drive ratio (the gears), the brakes, and the riders posture (physical attitude). The steering apparatus is therefore an important ingredient to a successful ride whether it be recreational or in competition with other riders. Choice of correct gear ratios to match the demands of varying terrain, ready access to the brakes to control deceleration, or in emergency, and upper body support, together with the appropriate selection of riding position that meet the rider's needs. Some examples of riding positions are, low profile for aerodynamic efficiency, upright for maximum power during acceleration, or climbing steep hills, and positions that aid in recovery and comfort.

For many of these riding positions there is provided an optimum hand-hold position on modem handlebars. The most commonly used position is referred to as the Base or Brake-hoods position, where the hands are placed on top of the housings that contain the brake and gear levers. The Brake-hoods are ergonomic in design with a soft rubber gripping area that provides the fingers with full-time contact with brake and gear levers. The Brake-hoods position is used: when mounting or dismounting, during off-the-seat acceleration or hill climbing, during slow or difficult maneuvering, at any time when the use of brake and gear levers is required, and for recovery after hard effort. (Shimano STI™ levers are a popular design that incorporates levers which can be moved in different ways to control either the brakes or the gears.) This position, therefore, provides the rider with the best access to controls, but it supports the rider's torso in a more vertical position that is not aerodynamically efficient.

To remedy this problem a second hand-hold position was developed where the handlebar is extended downward and rearward to provide a means of riding with the torso in a more aerodynamic horizontal position. This is called the Drops position and is regarded as a faster position than the Base position because of its aerodynamic advantage. In order to maintain access to the controls the levers are also extended downwards so that the rider may change a gear or operate the brakes from the Drops position, but the levers are harder to reach from this position and require to be moved further before they can activate either brakes or gears which could be unsafe in an emergency.

A third position is where the rider's hands are placed on the horizontal portion of the handlebar on each side of its attachment point. It is normally referred to as the Hill-climb position and is useful when riding up a steady incline that is not so steep as to require full power. The rider sits upright and the forearms are parallel and near horizontal with the elbows closer to the rider's body. It is also used as a recovery position that is not conducive to higher speeds, and there is limited access to the controls.

During the mid 1980's the Aero position was developed. Attachments that include an additional set of handles that extend forward and taper so that the rider's hands are close together with armrests fitted near the attachment point of any conventional handlebar became very popular for all forms of racing. Although it added extra weight this device was noticeably faster than any other riding position. Aero bars allowed a rider to adopt a low and compact body attitude suitable for almost all road conditions, but excluding the steeper hills. The one disadvantage was that access to the brakes and gear levers was awkward and it was possible to fumble and miss a brake lever during an emergency. In races where many riders are bunched together accurate control of speed utilizing the brakes is essential, and some multiple crashes have been caused by riders using aero-bars in close proximity with other riders when they failed to brake in time to prevent over-running the bicycle in front.

Cycle racing, therefore has developed into many forms, but can be divided into two main groups: team events that permit draughting (riding within the slipstream of the cycle in front to reduce energy expenditure), and individual events that do not permit draughting. Currently the use of Aerobars is limited to Non-Draughting events that include Triathlons, Duathalons, Time Trials, Multi-sport, and some Track racing events.

In summary, the current situation relating to cycle racing is not ideal, either from the aspect of safety, or the potential to race at higher speeds. The brake and gear levers are readily accessible at slower speeds, when starting and stopping or climbing steep hills, but their use is compromised in either the Drops or the Aero positions where the vehicle is likely to be traveling at higher speeds and therefore the rider has reduced reaction times. Consider a rider on a bicycle that is equipped with aero bars competing in a race that includes a hill with level road on each side. The cyclist accelerates to gain momentum approaching the hill, during which time it may be necessary to change gear at least once thereby disturbing their aerodynamic form to reach for the gear lever, which would have a slight braking effect. As the cyclist reaches and ascends the incline there would be more gear changes, timing of which is also important to maintain rhythm and cadence. During this time the rider may need to turn the head from the road ahead to see the gear levers, both during acceleration and ascending the hill without ready access to the controls. The rider's hands are then transferred to the Brake-hoods position and the rider lifts off the seat for maximum power over the top of the hill, then returns to the Aero position to accelerate down the descent and along the flat road ahead. During this time gears must be changed and some braking required as the rider negotiates bends at high speed and at high risk with limited access to brakes and the possible need to take the eyes off the road ahead to locate the controls. In an emergency, a rider may be forced to choose between the option of trusting that his/her hand will find the brake lever, or risking taking the eyes off the road ahead to ensure that the hand reaches the desired lever.

The ideal bicycle, therefore, would be one that has easy access to the controls in all riding positions (for safety and efficient timing) and a choice of riding positions that would give the rider maximum advantage during a race. For example, the Base position and the Aero position. On such a bicycle riders would always have the brakes at their fingertips ready for immediate use at all times, without the need to take the eyes off the road ahead; and also gear levers at their fingertips to provide perfect timing for every gear change, whether climbing a hill in the Brake-hoods position or descending and negotiating bends in the Aero position.

It is not practical or economically viable to provide a bike with two sets of controls. Therefore, the ideal option is to provide one set of handles, that have brake and gear levers attached, yet which can be moved/transferred/adjusted and locked in at least two riding positions, selectable at will by the rider while in the act of riding a bicycle. Such an arrangement would have added aerodynamic advantage in the Aero position and the potential for reduced weight because the handles for the Base and the Aero positions are the same. Likewise, the levers would be operated in exactly the same way, regardless of riding position, thereby providing opportunities for smaller and/or lighter lever assemblies.

At world, national and regional cycle racing and recreational events riders are often bunched together. It is important during these times that the rider has as much control over the cycle as possible. Stability is best maintained when the rider has both hands positioned or gripped on the handlebars, and where the hands are in contact or in the proximity of gear and brake levers. This safety requirement is important at all times during a ride.

The hold on the handlebars at all times is often relinquished by one hand at a time during competition or recreation, usually when the rider is consuming food, making a hand signal, or making a transition between riding positions, for example, from a wide or normal (conventional) position to an aero position. The aero position is the typical position taken when a rider is using aero bars.

Further, when cycling, the rider accounts for over two-thirds of the drag the entire vehicle must overcome. The amount of drag is an important consideration in competitive cycle sports. Reduction in the drag can result in improved cycling performances even where there is no change to the power input of the rider. Reduction in the drag may be achieved by aerodynamic design of the bike components, such as the wheels, frame, and so forth. For example, aerodynamic wheels can reduce drag compared with standard wheels, whilst aerodynamic frames can reduce drag compared with round frames. The critical areas of the frame tend to be the leading edge (fork, head tube, handlebars and the area between the rider's legs. The frames that are found to perform the best tend to have air-foil shaped leading edges and seat tubes (or no seat tubes).

However, critical to the overall aerodynamics of the bike and rider combination is the rider's positioning. Over the past decade it has become increasingly apparent that an efficient aerodynamic riding position when time trialing is crucial to performance of either road cyclists or tri-athletes. Having the rider assume the aero position has been found to be one of the most successful ways to increase speed by reducing drag caused by the rider's body and yet also save the rider's energy.

A good aero position has three components:
1. The rider's position relative to the pedals, so the rider can pedal effectively (which may require adjustment to the seat position); and
2. The rider's ability to control the bike, yet still do things such as eating and drinking when required; and
3. The overall aerodynamics of the rider and the bike.

When in the aero position the key elements for the rider are:
1. Having a horizontal torso; and
2. Narrowly spaced elbows; and
3. Knee width to enable pedaling with knees close to the top tube.

To enable this position to be achieved the advent of various types of aero handlebars has been one of the most significant contributions. These aero bars have enabled riders to achieve a much more aerodynamic position by moving their arms closer together thereby presenting a more streamlined entry profile with reduced cross-sectional area.

Aero bars were first developed for cycle racing around 1987. They are an accessory that is attached to conventional handlebars so that the rider may assume a more streamlined riding position than the drops position because the forearms and elbows are closer together forming a "V" or arrow-shape that directs airflow around the torso.

There are various types of aero bars. They usually have two handles which extend forward from the conventional handlebars and are close together, approximately 150mm apart. Some are simply an A-frame with hand hold positions near the apex. Others that include two separate aero bars may be linked or are independent of each other, but are attached to the main handlebars adjacent the bike stem. Yet others may include a combination of aero and conventional handlebars in a single unit mounted directly onto the front forks steerer tube and from the forward end of which two hand grips extend for aero position riding as an alternative to bars that include the 'drops' riding position.

Padded arm rests can be incorporated into aero bar accessories to support the forearms near to the elbows. The arm rests are typically cupped and may be mounted in various ways, such as to the main handlebars. However, depending on the position of attachment of the arm rests to the main handlebars, or the configuration of the arm rests themselves, the presence of the arm rests may hinder or prevent the rider from gripping the handlebars in the hill-climb position. Accordingly, the configuration and placement of arm rests in conjunction with aero bars is an important consideration to rider comfort and performance.

Aero bars have allowed the rider to assume a compact streamlined position, which has been shown to improve speed and efficiency by around 5%. Thus, the arrangement of aero bars in conjunction with standard handlebars has enabled riders to use the standard handlebars, with their wide grip, for slow speed maneuverability, during climbing and acceleration, access to controls and mounting and dismounting and the aero bars as an option for everything else.

There are however a number of problems with existing prior art systems. For example, where aero bars are fitted as an accessory to an existing bike, the rider has in effect, two sets of handlebars. The rider can only use one set at a time.

Further, brakes and gear shifters are typically on the main, standard handlebars. There has previously been no easy access to brakes and gear change levers on aero bars. Brake levers, gear change levers and combined brake and gear change levers such as the Shimano STI™ system are usually remote from the aero bars. Therefore when the rider is in the aero position, control of the bicycle is compromised, as the rider has to reach from bar to bar in order to effect a gear shift or to apply the brakes. Therefore, whilst aero bars help the rider to go faster, it is recommended that the rider keep the hands positioned near the brake levers for control of deceleration (either on the brake hoods or the curved "drops" of the handlebars) for sharp corners, difficult descents, rough pavement, strong gusty winds and any traffic condition that would require a quick stop. As a result of this effect loss of control of the bike can result in a pace line pile up.

A racing configuration that is popular provides gear change levers that are attached to the aero bars and brake levers located on the normal handlebars as an alternative to the more conventional arrangements listed above. This configuration also fails to meet the needs of the rider. For example, there is difficulty in changing gear during off-the-seat riding as is required during hard acceleration or hill climbing that can cause the rider to lose control, rhythm, or just valuable seconds during a time trial. It also fails to solve the problem requiring easy access to the brake controls in an emergency while riding in the aero position.

Aero bars have therefore been outlawed for some forms of draught legal cycle racing as their use has been attributed to some major crashes during bunch riding.

However, triathlon, duathalon, multi-sport and time trial cycle racing do permit the use of aero bars. The aero position may also be used whenever there is clear road ahead, with the exception of steep hills and tight bends where the rider has best control with the hands in a wider position, commonly referred to as the brake-hoods or the base, position.

The base position is used when mounting and dismounting the bike or traveling at slower speeds. This may include starting off or slowing to a stop. The base position is also used when the rider is off the seat, supporting their weight on the pedals and handlebars, during hill climbing or acceleration, or other times of slower speeds, where the wider position provides better control. The base position is also used when gear changes are made or braking is necessary, when there are braking and control levers located at the base position.

On handle bars that include a downwardly curved portion at either end, a lower wide position (the "drops" position) is achievable. This position is more usually associated with conventional cycle racing, as opposed to triathlon racing. The gear change/brake levers are extended downwards to enable the rider to reach them in the drops position.

Although these levers extend downwards to be near the drops riding position, they are not always easy for some riders to operate because they require greater travel to effect a gear change or braking effect. The weight is also a consideration. It is preferable to have smaller, lighter controls that are always operated in the same way, regardless of riding position.

A further problem with conventional prior art aero bar systems is that although the rider is in a more streamlined position in the aero position, when using the aero bars, the unused part of the standard handlebar and the associated levers in the wide position remains out in the slipstream even through the rider's arms are not, thereby contributing to drag which may slow the rider down or expend energy. The existence of two sets of handlebars also adds to the weight of the cycle, which may reduce riding efficiency and speed.

Accordingly, there would be potentially realisable benefits in having a single set of handlebars with controls attached which could assume at least both a conventional handlebar arrangement (to enable the base position to be achieved) and an aero bar arrangement (being the current fastest known position, particularly for racing) as required by the rider, yet in a manner which would overcome the problems of retaining safe access to brake and gear systems.

One example of adjustable handlebars is New Zealand Patent No. 102780. However, this document discloses a device which only provides for lateral movement of the handlebars and does not enable the handlebar to be fixed into multiple positions. This is obviously not practical for competitive riding. This device is also not adjustable while the bicycle is being ridden.

In yet another prior art system, there is provision for folding the handle bars of a bicycle independently of each other, but in an alignment substantially parallel to the front bike forks. Such an alignment is designed to effect a collapsible or foldaway bicycle for storage or transport and is not applicable to re-arrangement of the handlebars for use by a rider riding the bicycle.

Known steering apparatuses are disclosed in US-A-3863521, US-A-5555775 and US-A-5737967, which are described in more details on the following pages 15 and 16.

Accordingly, while the present invention has a number of potentially realisable applications, it is in relation to providing an alternative handlebar arrangement that the present invention was developed. More specifically, it was with the problems associated with the design, operation and current use of both aero bars and standard handlebars in mind, that the present invention was developed. Further, it is with the potential for providing a safe alternative to existing non-adjustable handlebars and to enable aero bars to be used with greater safety, that the invention was developed.

It is with these objectives in mind that it would be useful therefore, to have steering apparatus in the form of handlebars which provides:
a) the rider with options for use of the handlebars in either the base position or the aero position, or any other position that may be required or become popular; and yet also provided
b) improved control of the bike; and/or
c) aerodynamic efficiency; and/or
d) access to gear change and brake levers, in all required positions; and/or
e) access to gear change and brake levers which can also be safely operated while the bicycle is being ridden; and/or
f) a positionally adjustable set of handle bars thereby removing the need for two sets of handlebars and thus effecting a reduction in the weight of the bike; and/or
g) a positionally adjustable set of handle bars that is easy and safe to operate between positions; and/or
h) a positionally adjustable set of handle bars that addresses the need of prior art systems for the rider to relinquish or transfer the grip from one set of handlebars to another.

It would be advantageous to have an invention that offered at least some if not all of the advantages of the above proposed handlebar apparatus. Therefore, it is an object of the present invention to consider the above problems and provide at least one solution which addresses a plurality of these problems.

It is therefore a further object of the present invention to at least provide the public with a useful choice or alternative system.

Further aspects and advantages of the present invention will become apparent from the ensuing description which is given by way of example only. It should be appreciated that variations to the described embodiments are possible and would fall within the scope of the present invention.

All references, including any patents or patent applications, cited in this specification are discussed in relation to what their authors assert and do not constitute an admission by the applicant as to the accuracy or validity of the cited documents. It will also be clearly understood that, although this prior art discussion includes a comparison of various systems with reference to the present invention this does not mean the present invention is included as part of the common general knowledge in the art, in New Zealand or in any other country.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

Further aspects and advantages of the present invention will become apparent from the ensuing description which is given by way of example only.

### Disclosure of Invention

The present invention provides a steering apparatus including two handlebar portions according to claim 1. Methods for transferring a handlebar portion of a steering apparatus as claimed in claim 1 are disclosed in claims 7 and 10.

The term steering apparatus in relation to the present invention refers to and includes apparatus capable of directing the course of a vehicle. With reference to the present invention, the steering apparatus more specifically includes handlebars or their equivalent, and the levers and controls. With further reference to the present invention the handlebars include bicycle handle bars. Reference to bicycle handlebars should not be seen to be limiting however, as the principles of the present invention may be applied to other steering mechanisms that may benefit from multiple positioning.

The term "handlebars" usually refers to the steering mechanism for bicycles; the equivalent of a steering wheel, though used in conjunction with the rider's balance or centre of gravity to steer. Reference to handlebars may include any part of the mechanism used to control or direct or steer or maintain balance of the bicycle and provide upper body support to the rider. The term handlebars should be understood to usually include controls for braking or gear changing and may also include at least one handle or area used to grip or control the steering mechanism. The plural should also be interpreted to encompass a single handlebar.

People ride bicycles for different reasons and bicycle design reflects the purpose for which the bicycle is used. A road bicycle is designed for cycling on the road. A mountain bicycle is designed for cycling off-road. A track bicycle is designed for track cycling on purpose-built cycle tracks. A racing bicycle is designed for bicycle racing and is fast, lightweight and aerodynamic. In a bicycle race awards are given on the basis of relative performance. Accordingly, improvements in performance are constantly strived for.

Air, rolling, and frictional resistances, as well as the influence of gravity are forces that must be overcome when riding road or racing bicycles, whether for recreation or competitively. While cycling on flat roads, the influence of gravity is virtually eliminated. Likewise, mechanical friction is a small component of the total resistance. Air resistance to cycling is by far the largest factor and demands the vast majority of energy expenditure when cycling velocities exceed 19.3 kph. In fact, air resistance at 29.0 kph makes up over 80% of the total resistance. In fact aerodynamic drag accounts for 56%-75% of the total resistance during road cycling.

Mathematically, drag created by air resistance increases as the velocity squared. However, the power or energy expenditure required to overcome resistance during cycling increases as the velocity cubed. Thus, as velocity increases, an exponentially greater level of power must be produced in order to attain that speed. Similarly, the benefits of reduced drag in speed attainable and/or energy saved become substantially greater when racing at higher speeds.

In order to minimise air resistance and reduce physiological stress while cycling at higher velocity, cyclists will often draft. Drafting involves cycling in close formation behind another cyclist's rear wheel (within about 0.5 m). Drafting is a key strategy in reducing energy expenditure while riding on a single bicycle. Energy expenditure may be reduced by up to 27% when drafting in tight formation.

However, drafting is only one way to minimise the effects of drag. The primary focus in the sport of cycling has involved the role of the rider's body position and aerodynamic frames in the hope of reducing wind resistance while cycling on single bicycles. Furthermore, handlebar design is one area where attention has been focused. Handlebar design is a trade-off between several desirable qualities. These include, but are not limited to:
- Enabling the rider to assume an aerodynamic position.
- Enabling the rider to change body positions during long rides, preventing fatigue.
- Providing upper body support.
- Providing necessary leverage for steering and balance of the bicycle and providing leverage also to the whole frame of the bike to increase power to the drive train.

There are many versions of handlebar and grip design used to provide alternative bicycle riding positions and better aerodynamics. Whilst some designs allow variations of use and adjustments of position, others dictate a fixed configuration.

The variations available serve to illustrate designers' attempts to solve problems that involve ergonomics and access to controls, particularly in the drops position. This indicates that the drops position has disadvantages for the rider that may include discomfort, lack of control and balance, awkward access to control levers and so forth.

The above description raises issues relating to standard handlebars. However, in the present invention the term "handlebars" also includes aero bars. The width of standard handlebars is related to the rider's shoulder width. For aero bars, the width is not related to the width of the rider's shoulders, but to the practicalities of use of the aero bars. Aero bars, in general, enable positioning of the rider's hands and elbows closer together providing better aerodynamics. However, some riders find the narrow position of the elbows to be restrictive and instead require their elbows to be further apart to facilitate breathing.

Nevertheless, it is with improved cycling performances using aero bars in mind that the present invention has been developed. The present invention is therefore directed to address at least in part some, if not all, of the disadvantages of conventional handlebars in particular situations. Yet at the same time the present invention seeks to incorporate the advantages associated with the use of conventional handlebars. In addition, the present invention seeks to also address the limitations of pre-existing aero bar design. Further, the present invention seeks to provide an aero bar design which obviates the need for a cyclist to have all or any one of conventional handlebars, drops and aero bars on a single bicycle handlebar assembly.

Accordingly, reference in this specification to at least two positions will be made with reference to the first position being a position seen when riders are using aero bars and/or the riding position taken when a rider is assuming a more streamlined position. This may be hereafter referred to as the aero position.

Reference to another position may be made with reference to the more upright position seen when riders are holding or gripping conventional handlebars, such as in times of acceleration, braking, hill climbing or gear changing or simply as an option to using aero bars. This position shall be hereafter referred to as the base position. For clarity, the term base position may in cycling circles also be called the wide or brake hoods position. Throughout this specification use of any of these terms shall mean the Base position.

The base position may also incorporate a "drops" position. However, the above definitions should not be seen to be limiting the scope of the present invention's manufacture or use, as other positions may be achieved without departing from the scope of the present invention.

The at least two positions may also refer to transitory positions between or beyond the aero and wide (base) positions, or other positions that may conceivably be taken by a rider. The positions may be discrete or continuous.

Throughout this specification, reference to a rider may be made with reference to someone who is in the act of riding the bike, as distinguished from a rider who may have stopped and may be adjusting or maintaining the bike.

Reference to the handlebars being capable of being fixed in at least one position by the rider in this specification may refer to the handlebars being able to be fixed in the positions previously referred to.

In preferred embodiments, the handlebars are considered to be divided in the centre to produce a handle bar made up of two portions, with each portion capable of moving or pivoting about an axis independent of that used for steering.

Throughout this specification, reference to the term handlebars should now be understood to mean a handlebar made up of two portions, each portion consisting of up to half the handlebar where the handlebar has been split at or around a central point. Accordingly, it should be understood that each handlebar portion has the appropriate brake and gear mechanisms attached, as is usual for a standard handle bar arrangement, but may exclude provision for a "drops" position.

It should be appreciated that each portion of the handlebar can either move around its own discrete pivot point, or both portions can pivot or move around a central dedicated axis point that is separate from the axis used for steering.

In preferred embodiments each handlebar portion moves around its own discrete pivot point. Preferably each pivot point is substantially equidistant from, or located at, the centre line of the bike. Appropriate means are required to effect movement of the handlebar portion. Such movement in one embodiment of the present invention is preferably operated by resilience means. Further, at least one resilience means is associated with each handlebar portion. In the present invention the resilience means includes a spring. An advantage of the movement of each handlebar portion independently from the other under spring pressure is that the rider has the option of either moving both sides at the same time, or of moving each handlebar portion independently, without compromising the control of balance and steering afforded by that handlebar portion, as control and balance are maintained and controlled by the portion that is not moving between positions. In addition, there is provided a fast and efficient method of transfer.

A further advantage is that the movement of each handlebar portion is effected as a result of spring pressure the release of which is controlled by the rider. Such rider control means that steering and balance are not affected during the movement or compromised if the mechanism should malfunction or become inoperative as the result of an accident.

US Patent No. 3,863,521 (Gastos et. al.) describes adjustable handlebars that move between two set positions where the rider moves a locking means which releases the bars from one position and allows them to be moved and locked to a second position. A disadvantage of this invention is that the movement of the handlebars is performed manually in both directions by the rider, thereby providing less control while changing handlebar positions. This compromises the rider by redirecting the rider's focus from maintaining control and stability of the bike, along with trying to maintain the level of performance, to focusing on the manual realignment of the handlebars. Further, whilst movement of the handlebars described in this patent may appear to have relevance to the present invention, the aero position was not known at the time of this patent and therefore, practical considerations relating to the use of aero bars would likely not have been in the mind of the patentee.

US Patent No. 5,555,775 (D'Aluisio et. al.) describes adjustable handlebars that can move between two set positions. These bars are intended to be interconnected for coordinated swinging movement between the standard and the aero position, so that when either of the handlebars is moved, the other moves with it. Again, rider safety and performance is compromised during operation of this invention. The riders could not reasonably retain adequate control of the bike in a situation where both handlebars are moving at the same time. Further, the rider's attention would be redirected to effecting movement of the handlebars and ensuring the movement is completed as opposed to the rider's attention being focused solely on maintaining the level of performance. It would not be uncommon for speed reduction to be a facet during operation of this invention.

US Patent No. 5,737,967 (Hartley) describes adjustable handlebars, where the two sides of the handlebars are connect by a meshed gearing, meaning that movement of both bars takes place at the same time, in a similar manner to the above-mentioned US Patent No. 5,555,775 (D'Aluisio et al), providing the rider with less control during movement between the standard and aero positions. Accordingly, problems associated with the above described invention would also be relevant to this form of adjustable handlebars.

With reference to the above inventions, the present invention enables the rider to select a position of comfort and a method of transfer, which the above inventions do not.

In preferred embodiments of the present invention the handlebar portions each move in an arc between the at least two positions. However, this does not limit the scope of the present invention to only rotational movement.

Accordingly, it should be appreciated that in other embodiments the handlebar portions may move in a straight line or rotate through different planes on more than one axis, without departing from the scope of the present invention.

In further preferred embodiments, the handlebars may be fixed in each desired position via latching means. The latching means may also include or be adapted to perform as locking means to ensure the handlebar portions are locked into the desired position as required. Further, either or both the locking and latching means are preferably releasable. Release of the latching means may be effected via actuator means.

The actuator means may be a spring pressure release mechanism, a lever, button, switch or any other device adapted to, or capable of, releasing the latching and/or locking means and thereby initiating the first stage of movement of a handlebar portion to one of the desired positions. Therefore, although some possibilities are listed, these are by way of example only and should not be seen to be limiting in any way.

In preferred embodiments however, the actuator is configured as a spring pressure release mechanism. Preferably, the spring pressure release mechanism is adapted to co-operate with arm rests associated with the bike. The arm rests are preferably positioned adjacent each handlebar portion and are provided to enable the rider to rest the arms on the arm rests when the rider assumes the aero position. Whilst such arm rests are known and used by riders when in the aero position, in the present invention the arm rests operate as trigger means. Accordingly, as the rider applies pressure to the arm rests, that pressure is transferred to the actuator (in the form of the spring pressure release mechanism).

Accordingly, the actuator may be operable by the application of the rider's forearms against the armrests, with each armrest being depressed against its own spring pressure to release its corresponding handlebar portion such that the handlebar portion is activated to move from one position to another either in series or in unison as dictated by the rider. However, describing one actuating system should not be seen to limit the scope of the invention in any way, as it should be appreciated other systems and apparata could be used to release any preferred actuator means. Accordingly, other trigger means may include the use of a button and/or cable arrangement or the like.

In preferred embodiments, where the spring pressure release mechanisms are operable by the forearms of the rider against armrests, the spring may be exterior or interior to the handlebar. Internally mounted springs allow for a more aerodynamic surface and are less likely to injure a rider. Internal springs can be fitted down the interior of the handle bars and down the interior of the support arms that support the armrests, or within the main body of the apparatus.

When a rider wishes to move into the aero position, one arm is moved onto the relevant armrest. The pressure of the arm on the armrest results in a responsive movement of the armrest which in turn effects movement relative to the spring pressure of the armrest. This movement extends, compresses, or rotates the spring(s), causing the locking mechanism to open, thereby releasing the corresponding handlebar portion which in turn pivots upwards and forward through an arc and into the aero position. As previously described the movement of the handlebar portion itself results from the resilience of its own spring. The handlebar should then arrive in, or near the rider's hand.

In some embodiments, the locking and/or latching means may include a locking cam, a tapered slot, a hook, or any other latching device capable of being used with, or adapted for use with the invention. However, these alternatives are not to be seen as limiting as they are listed by way of example only and such options and variations will be known to and understood by a person skilled in the art. Similarly, it should be appreciated that the handle bar can be held in the aero position by spring pressure alone.

In preferred embodiments, the handle bar may be maintained in the aero position against a fixed stop and be held in place by a light catch which will release immediately on removal of the rider's weight from the respective armrest. Alternatively, in some embodiments, the weight of an arm on the armrest alone may be sufficient to apply pressure on the handlebars and may act like a brake preventing rotation of the bars back toward the wide position.

Once the rider has control of the bicycle with the first handlebar, he or she then moves the other arm on to its armrest, tripping the handlebar locking cam and allowing the handlebar portion to similarly swing upward and forward into the aero position under its own spring pressure and be positioned near or in the rider's other hand.

At any time the rider wishes to return the bars to the normal position, he or she pulls the handlebar portions downward and rearward against the spring pressure of the individual handlebar until the releaseable locking mechanism on each side is re-latched and secures the handlebar portion and the rider's hand in the wide, or base, position. The realignment of both handlebar portions to the wide position may be undertaken either in unison or one at a time.

It should be appreciated that the arm must be lifted from the armrest in order to move the handlebar portions from the aero to the normal, wide, or base, position. This is because the armrest will swing upward under its own spring pressure and release the aero-lock and at the same time rotate the cam, tapered slot, or other locking means, into a position to receive and lock the corresponding handle bar securely in place at the wide or base position.

During operation of the handlebar portions between the aero and wide positions and vice versa, full steering control can be maintained as the handles may be returned to the base position one at a time, allowing control to be maintained by at least one hand at all times. Alternatively, where both handles are returned to the base position simultaneously the movement against the balanced spring pressure maintains and allows for corrective adjustments to the steering whenever necessary, throughout the transfer to the new position, thereby maintaining full steering and balance control.

The above mechanism should not be seen to be limiting however, as other methods of releasing the lockable mechanism may be used. For example, electronic releasing of the lockable mechanism may not require movement of the respective arm rest and may provide powered movement in both directions.

It will be appreciated that:
a) The natural reactions of a rider, including involuntary correcting movements with regard to steering and balance and the like, are still possible; and:
b) The addition of the spring to the handlebars allows the rider to work against the pressure of the springs to place the handlebars in the wide position, effectively providing feedback to the rider; and
c) The spring pressure also helps to maintain steering control by providing balanced progressively variable resistance to each side of the handlebars.

It should also be appreciated that each spring has provision to adjust and alter the tension to match that of the spring on the opposing side.

Alternatively, one central spring may control both handles in configurations where both sides share the same centre line. In this instance, the tensioned spring is automatically balanced throughout the movement.

The spring in each handle serves two purposes. Firstly, the spring operates to move its handle from the wide position to the aero position. Secondly, the spring provides a balanced resistance that makes it easier to return the bars back to the normal position, either together or separately.

The spring pressure provides a rider with individual control to each side of the handlebars, allowing equal pressure balance on each side, allowing continuous smooth riding while transiting through the range of positions between the wide and aero positions, or between the wide and drops positions, but not limited to these.

The present invention provides a system which more closely resembles the method riders use to transfer from the normal base position to the aero position when using existing aero attachments. Firstly, one forearm is placed in the armrest and then the hand takes a controlling grip on the aero bar and then the other hand is placed in the aero position in the same fashion.

To return to the base position (in an emergency both hands can transfer the aero bars very quickly at the same time), moving the bars in unison against the spring pressure mimics the movement but gives added security as the steering control is maintained.

It should be appreciated that one purpose of the spring mechanisms is to provide an automatic operation that allows the rider to achieve the desired position quickly and with the least distraction from the act of riding as possible. In addition, it enables the rider to quickly return to the base position in an emergency.

It should however, also be appreciated that the action achieved by the springs as described herein may also be achieved with pneumatics, electronics or other mechanical means. For example, systems using the airflow, operating a direct link from the armrest to the bar, or any combinations of the above, may be employed although these are listed by way of example only and should not be seen to be limiting in any way.

The springs also play an important part in the operation because, should the mechanism become jammed for some reason - such as due to a crash, through the affects of a jammed stone and so forth, adjustment of the steering apparatus will not operate correctly under spring pressure and thus provides a warning to the rider that repairs are necessary before further use.

A potentially realisable advantage of the above mechanism is that it allows the rider to have full time access to the controls because the controls mounted on each handlebar portion are in contact with the rider's hands. Therefore, as each handlebar portion is moved separately, the rider always has one hand on the controls thereby offering improved safety. This addresses one of the limitations of having separate aero bars and standard handlebars on a single bicycle, whereby the rider has to transfer hands from the aero bars to the standard handlebars to apply the bakes or effect gear changes.

Additionally, by having only one set of handlebars, there is reduced wind resistance and therefore improved efficiency when the rider adopts the aero position without the need for additional handlebars and attached levers that protrude sideways into the airflow, causing unnecessary drag. The various positions are achieved by one set of bars, so the weight of the bike is also kept to a minimum.

In further preferred embodiments the handlebars may include dampers or any suitable shock absorbing system to reduce vibrations caused by irregularities in the surface over which a bicycle may be ridden. Preferably, strategic mounting and locating points could incorporate a flexible or compressible material for the purpose of absorbing and reducing road shocks and vibrations. In some embodiments, the mounting and locating points can include the normal hand positions, the pivot points of each handle, or locating stops and their respective contact points. In addition, the level of shock reduction may be adjustable during a ride.

Examples of the flexible or compressible material may include rubber, nylon, plastic, fluids, springs/resilience means or other material(s) although these are listed by way of example only and should not be seen to be limiting in any way.

The present invention may also be adapted to include adjustment means to allow adjustment of the dimensions and/or the position of the handlebars to suit the preference of the rider. For example, there may be provided an orientation adjustment means facilitating adjustment of the orientation of the handlebars. There may also be provided a length adjustment means to adjust the length of the handlebars.

In some embodiments the adjustments may be by way of a clamp securing an internal tube with incremental rotary and/or linear adjustment options, or adjustable stops. However, other adjustment means may be used with or adapted for use with the present invention, including systems known to someone skilled in the art. This could include a range of replaceable handle attachments that vary in size from small to large.

Changing the orientation of the handlebars may refer to the ability to alter the height of the gripping area of the handlebars in, say, the aero position, according to the preference of the rider. The orientation adjustment means may allow the rider to control the degree of movement of the handlebars through vertical or horizontal planes. Thus, the aero position may be higher for some riders, or lower for others. The change in orientation may also be effected by rotation of one of the handlebars and may be undertaken by the use of an adjustable clamp, or at the point of attachment to the steering tube. Such alternatives are again listed by way of example only and should not be seen to be limiting in any way.

The present invention provides an apparatus for use by a rider of a bicycle that allows multiple lockable positions for the handlebars. These lockable positions may correspond to the particular riding position that a rider may take during a ride.

The aero position may be employed whenever possible, due to the streamlined position this provides. For example, the aero position may be adopted when on open roads or during headwinds, or when the rider settles into a steady racing rhythm.

The wide, or base, position may be adopted when the rider is mounting/dismounting the bike, when traveling at slow speeds such as starting off or slowing to stop, or when the rider is off the seat at times of hard acceleration or hill climbing, or simply as an option to riding in the aero position. It can also be used so that the rider's body acts as a wind brake when approaching a sharp corner.

The present invention has a number of potentially realisable advantages. To reiterate some of these, a comparison is made between the present invention and previous systems. Previously, when a rider was in the aero position using conventional aero bars and standard conventional handlebars on the same bicycle, the rider had no immediate access to the brake and gear change levers. These levers were positioned on the conventional handlebar positions, which meant in order to effect a braking operation or a gear change, the rider was required to change hand position from the aero bars to the wide, or base position, or at least move one hand to that position.

Whilst an alternative configuration provides separate gear levers that are fixed to the aero bars, the brake levers remain in the normal (base) position. In this case the rider would have no quick access to the gear levers while riding with the hands in the base position.

The present invention provides a system whereby a rider can effect wide and aero riding positions while still having immediate access to gear change and brakes levers. As one handle portion is being moved between positions, the other hand of the rider is always positioned by a brake and gear control. Further, the present invention may complement existing brake and gear change lever technologies, by providing access to them when the rider is in the aero position.

Timing a gear change during a ride is of crucial importance. Due to the time taken to move the hand from the aero position to the base position with previous handlebar technology, the timing of the gear change was more difficult to effect accurately and hence riding efficiency suffered as a consequence.

The present invention provides for a rider to time a gear change more efficiently as the gear change levers are accessible at all times and in all riding positions.

Similarly, when riding close to other riders or in traffic, a cyclist may need to match speed with the vehicle or cycle in front. The brake levers of the present invention are readily accessible and enable the rider to apply the brakes in a timely fashion in either position thus reducing the risk of the rider over-running the vehicle in front. Thus, a cause of bunch riding accidents, being a lack of access to the brake levers, is alleviated or minimised.

Previously, the aero bars were combined with conventional bars, adding to the weight of the bike. The present invention provides for a more lightweight apparatus because extraneous structures are removed from the handlebars. In the present invention, the handlebars used in the aero position and the wide position are the same, reducing the weight of the bike, and therefore increasing the efficiency of the ride.

Drag in terms of air resistance is also reduced, as the same handlebars used in the aero position and the wide position thereby obviating the need for two sets of handlebars on the one bike. Thus, there is no extraneous handlebar structure (such as the conventional handlebars) which could cause drag when the rider adopts the aero position. This improves the mechanical efficiency of the ride, which allows for an increase in speed or a conservation of the rider's energy.

In order to effect the changing of the position of the handlebars, the rider need not relinquish full control of the bicycle by removing or releasing their full grip from the handlebars. The nature of the present invention means that control may be maintained at all times as at least one hand is always on the handlebars. The gear change/braking action previously took the riders attention away from the path ahead. This potentially increased the risk of accident. The present invention permits instant access to the control levers in all riding positions without the rider having to take their eyes off the path ahead and therefore potentially reduces the risk of accident. Therefore the safety of the rider is increased, as control of the bicycle is maintained throughout each transition motion. It is therefore possible that the advantages of the present invention may mean that the aero position may become acceptable for draught-legal races in the future.

The present invention allows a rider to choose between an aero position and the wide position, or the wide position and the drops position. The drops position is also adjustable to meet the preferences of the rider.

As the handlebars of the present invention do not remain fixed in the aero position, the bicycle does not have a permanent front mounted protruding assembly as is the case with prior art aero bars. As such the potential to cause injuries or damage to other riders, due to such protruding bars when the bars are not in use, is obviated. Similarly, as the need for extended brake levers is nullified, smaller profiled controls can be used which would be less likely to cause injury during a multiple crash.

### Method of Attachment to a Bicycle

Conventional aero bars are normally secured to the handle bars which, in turn, are attached to the handlebar stem. The stem clamps to either the inside or the outside of the front forks steerer tube where it protrudes from the front of the bicycle frame.

In a preferred embodiment of the present invention the steering apparatus is secured directly to the front forks thereby replacing three separate items, including the aero bars, the handlebars and the stem. In a further preferred embodiment the steering apparatus is attached to the outside of the steerer tube of the front forks.

When the design of the front forks requires attachment to the inside of the steerer tube there is provided as an option, an adaptor. The bottom end of the adaptor wedges against the inside of the steerer tube and the top end of the adaptor provides an extension to the steerer tube, to which attachments can be fitted.

It is an object of the present invention that it will be attached to a bicycle at the top of the steerer tube of the front forks, or to the top of an adaptor that is secured to the inside of a steerer tube of the front forks.

However, this should not be seen to be limiting in any way as it should be appreciated that other means of attachment could be used. For example the handlebar clamp at the forward end of the handlebar stem may be employed.

### Potential Future Development

Although the combination gear and brake levers will function correctly on the present invention, they were designed to be located on conventional handlebars where they are operated from either of two positions. These positions are referred to as the brake-hoods and the drops positions. When the brake and gear levers are operated from the brake hoods, or base position, the rider's hands are placed on top of the levers' housing (brake hoods) and the levers are operated from above. When the brake and gear levers are operated from the drops position, the levers are operated from below. For this reason the levers are especially long so that the rider may reach them from the drops position. The present invention, however, only requires the levers to be operated from the brake hoods (above) position in all selectable riding positions. This provides an opportunity to create a special lever that is smaller and lighter in weight and which will further enhance the use of and advantages of the present invention.

### Brief Description of Drawings

Further aspects of the present invention will become apparent from the following description which is given by way of example only and with reference to the accompanying drawings in which:
- Figure 1: is a diagrammatic representation of a preferred embodiment of the present invention in the wide position; and
- Figure 2: is a diagrammatic representation of a preferred embodiment of the present invention showing the locking device operation; and
- Figure 3: is a diagrammatic representation of one preferred embodiment, being the mechanical linkage between armrest and its associated handlebar; and
- Figure 4: is a diagrammatic representation a bicycle including one preferred embodiment of the present invention; and
- Figure 5: is a diagrammatic representation showing the method of attachment to the front forks; and
- Figure 6: is a diagrammatic representation of an adaptor to facilitate attachment to forks which are designed to be secured on the inside of the steerer tube; and
- Figure 7: is a diagrammatic representation of a push button assembly that retracts a locking pin when the button is depressed; and
- Figure 8a, b: are diagrammatic front views of the steering apparatus in accordance with various embodiments of the present invention; and
- Figure 9: is a diagrammatic representation of three stages of a releasable locking means for use with the steering apparatus in accordance with one embodiment of the present invention; and
- Figure 10a, b: are diagrammatic representations of split sleeves which locate on the steerer tube, for use with the steering apparatus in accordance with one embodiment of the present invention.

### Best Modes for Carrying out the Invention

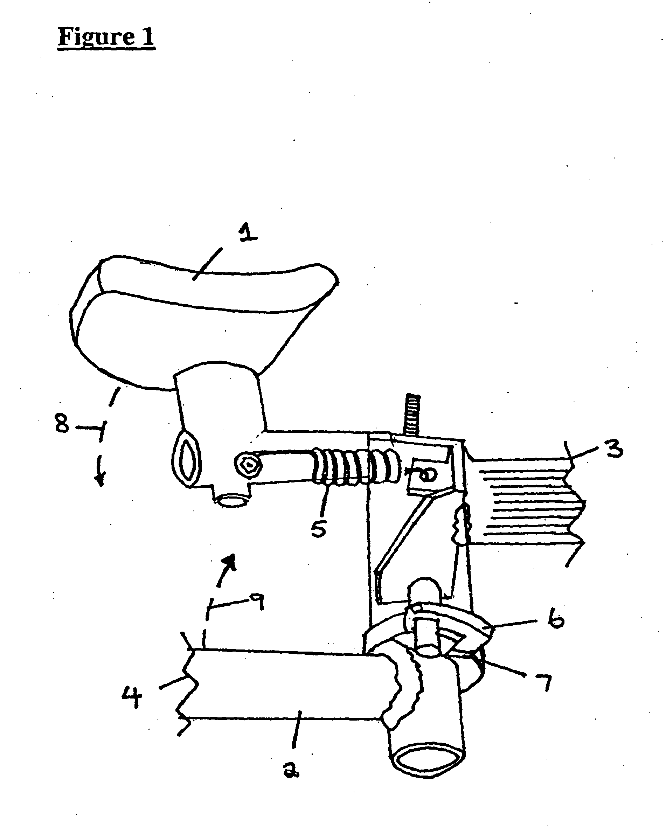

With reference to the diagrams by way of example only there is provided steering apparatus for control of a vehicle by a rider. Figure 1 illustrates a portion of one embodiment of the present invention, showing an armrest (1) connected to a bicycle handlebar (2) as described by the present application, in the "up" position and the handlebar secured (2) in the wide or normal position.

It should be appreciated that the diagonal lines (3 and 4) represent a break in the picture and at break (3) a mirror image of figure 1 would exist, creating a full handlebar and armrest arrangement that is secured to a bicycle handlebar stem at 3..

The arm rests (1) are maintained in an upward facing position by a spring (5).

The handle bars are secured in the wide position by a locking device (6). The locking means (6) fits into a recess (7) when engaged.

When a rider (not shown) wants to move from the wide or normal position to the aero position, the forearm of the appropriate arm is placed onto the armrest (1). The forearm is then pushed down, to exert a force on to the armrest (1). The armrest (1) moves in a downward arc as illustrated by arrow (8), stretching the spring (5) and rotating the locking means (6), releasing the handlebar (2).

The handle bar (2) then rotates in to an upward position toward its aero position, as indicated by arrow (9) and the rider's hands can easily be positioned on the handle, holding the gears and brake (not shown).

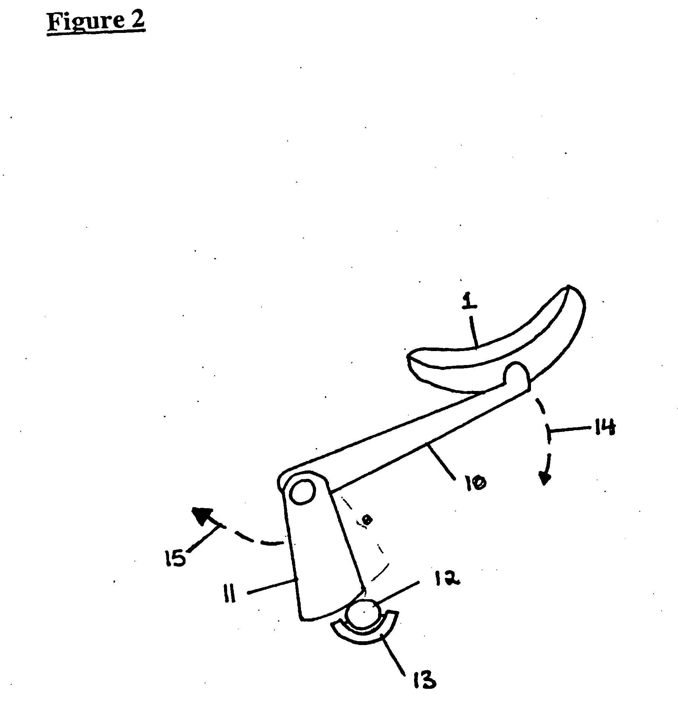

With respect to figure 2 there is illustrated another embodiment of the present invention showing a locking means (6) operation. The armrest (1) is connected to the armrest shaft (10), which in turn is connected to a cam (11) on the armrest shaft (10). The cam (11) contacts with a pin (12) which is secured to the handlebar (not shown). A rigid support (13) on the main body of the handlebar unit supports the pin on the opposing side to the armrest shaft (10).

When the armrest (1) shaft (10) is moved downward, as indicated by arrow (14), the cam (11) rotates away from the pin (12), as shown by arrow (15), and the pin (12) is released from the rigid support (13) allowing the handlebar (not shown) to rotate upward into the aero position.

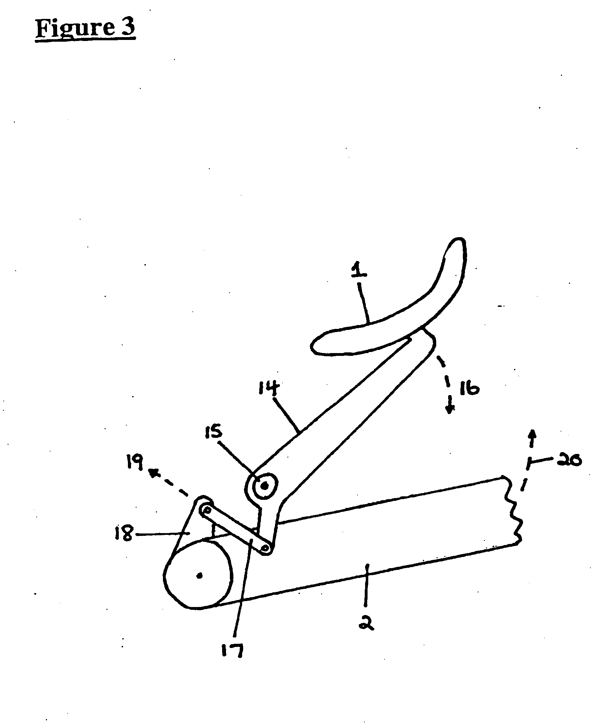

With respect to figure 3 there is illustrated one embodiment of the present invention, being the mechanical linkage between the armrest (1) and its associated handlebar (2). The armrest (1) is connected to the armrest arm (14) which is a single piece, but pivots around a point (15) when a downward pressure is applied to the armrest (14) as indicated by arrow (16). The armrest arm (14) is then connected to a connecting bar (17) which connects to the handlebar (2) which is also a single portion with raised connector (18).

When the armrest (1) is pushed downward in the direction of arrow (16), the armrest arm (14) pivots around the point (15). That pivoting motion pushes the connector bar in the direction indicated by arrow (19). The movement of the connector bar (17) causes the raised connector (18) and handlebar (2) to rotate in the direction of arrow (20), causing the handlebar (2) to rise under the applied pressure of the armrest (1) to place the controls (not shown) into the rider's hand at the aero position.

It should be appreciated that while the pressure of the downward movement of the armrest can be used to mechanically allow the handle to move upward to position the controls in the hand of the rider, springs can be added to assist the motion. While springs are preferred, they are not essential and other means to assist the motion could also be used, included pneumatic or electronic means.

For clarity, there are at least two types of locking means available for use with the present invention. Each one is releasable. However, one type can only be opened by activation of a designated actuator; whilst a second type can either be forced open, or released by activation of a designated actuator. For ease of reference, the former type shall be referred to as "secure", whilst the latter shall be referred to as "forceable".

In the preferred embodiment, the base position is a secure lock, whilst the aero position is a forceable lock.

It should also be appreciated that during transfer of the handlebar portions between the at least two positions, removal of the rider's arm(s) from the armrest; effects release of one locking/latching means associated with the arm rest and actuates at least one other locking/latching means associated with the handlebar portion. Application of pressure by the rider on to the handlebar portions against the spring pressure of the spring(s) of the individual handlebar then directs the handlebar portion to the base position. The pressure is maintained by the rider until releaseable locking means associated with the portion are re-latched to secure the handlebar portion and the rider's hand in the base position.

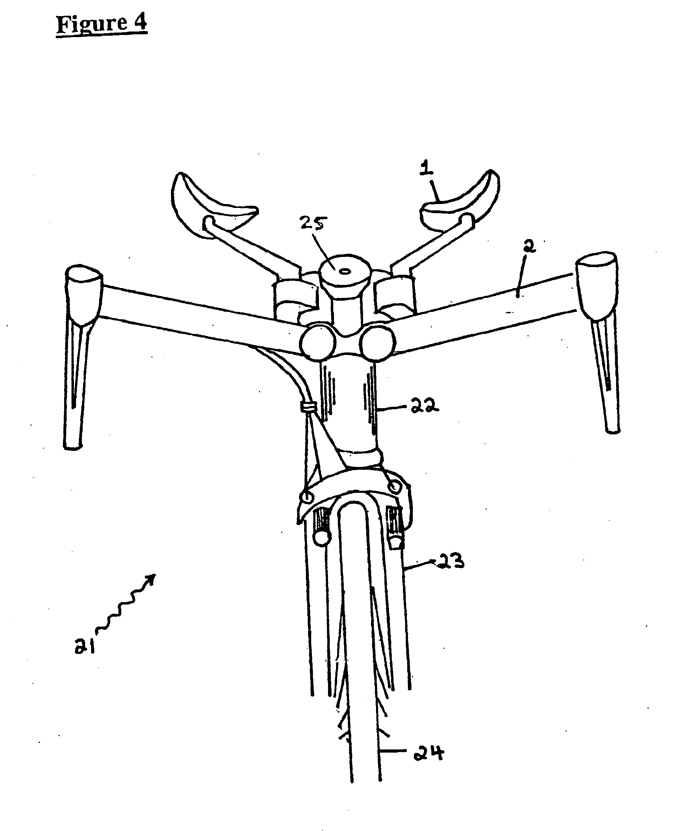

With respect to figure 4 there is illustrated a bicycle (generally indicated by arrow 21) showing part of the cycle frame (22), front forks (23) and front wheel (24) including the handlebar configuration as described in the present application, showing the point of attachment (25) to the front forks. Also illustrated are the handlebars (2) in the wide or base position and the armrests (1) in the upward unused position.

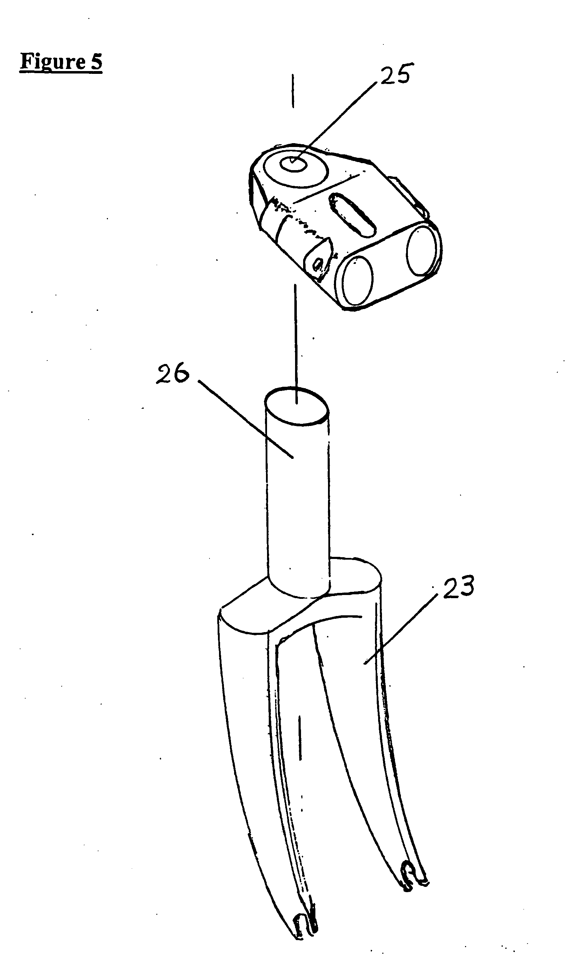

With respect to Figure 5 there is illustrated a typical set of front forks(23) that is separate from a bicycle frame to show the steerer tube(26) and the main body of the present invention(25). This detail is also shown at (25) in Figure 4.

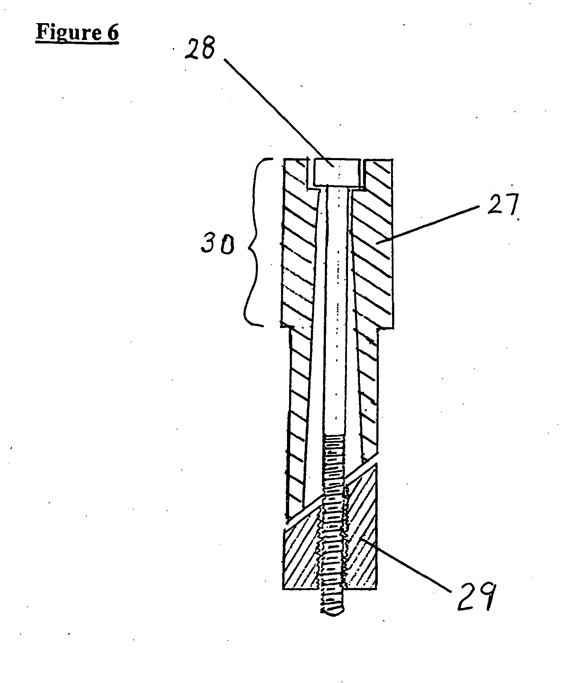

With respect to figure 6 there is illustrated a sectional view of an adaptor (27) with a long bolt(28) that is threaded to fit a special wedge-shaped nut(29) which forces against the inside of the steerer tube when the bolt is tightened and provides a mounting surface(30) for attachments.

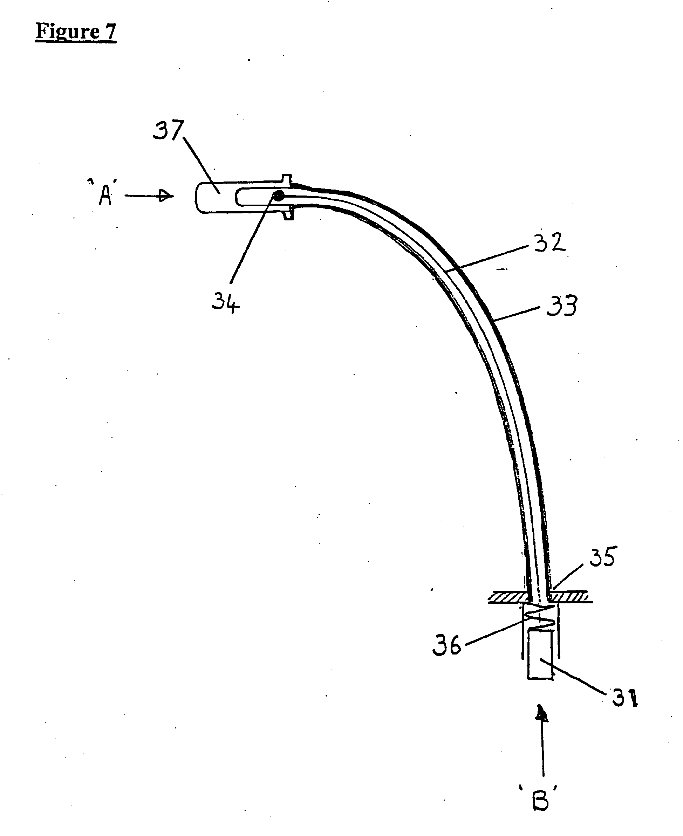

With respect to Figure 7 there is illustrated a locking pin (31) with push-button release. A flexible control cable (32) secured at (34) and outer casing (33) secured at (35) is connected between a push-button (37) which is attached to the outer casing(33) and a release pin (31) which is attached to the inner cable(32).

When the push-button (37) is depressed in the direction of arrow 'A' the locking pin (31) retracts in the direction of arrow 'B' compressing the spring (36). When the push-button (37) is released the spring returns the locking pin to its original position.

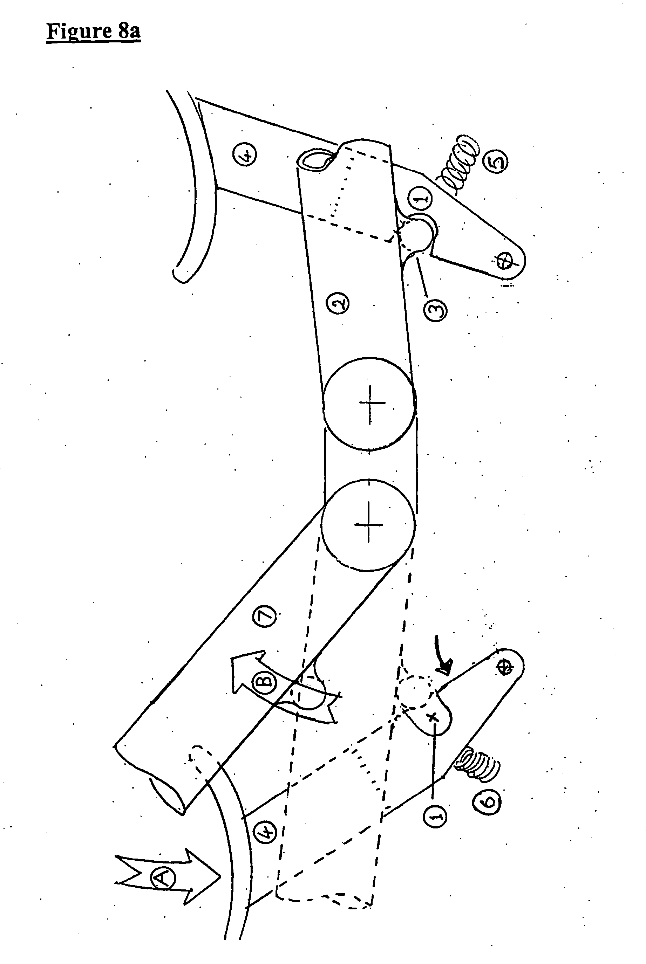

With respect to Figure 8a, there is illustrated a front view of an embodiment of steering apparatus of the present invention.

Figure 8a is a diagrammatic illustration of the current invention, viewed from the front. This view has a tapered slot 1 in each armrest support strut 4. In this diagram the left (half handlebar) is retained in the wide (base) position with its locating spigot 3 retained in the tapered slot 1 by pressure from the spring 5. The right (half handlebar) 7 has been released by downward pressure on its respective armrest at A, compressing the spring 6, and allowing it to move toward the aero position in the direction of arrow "B" as the result of pressure from its own internal spring (not shown).

To reverse the movement, each half handlebar is rotated manually against its spring pressure, so that the attached spigot contacts, and moves along the edge of an armrest support strut until it reaches the tapered slot at 1, where it is retained by pressure from the springs 5 and 6.

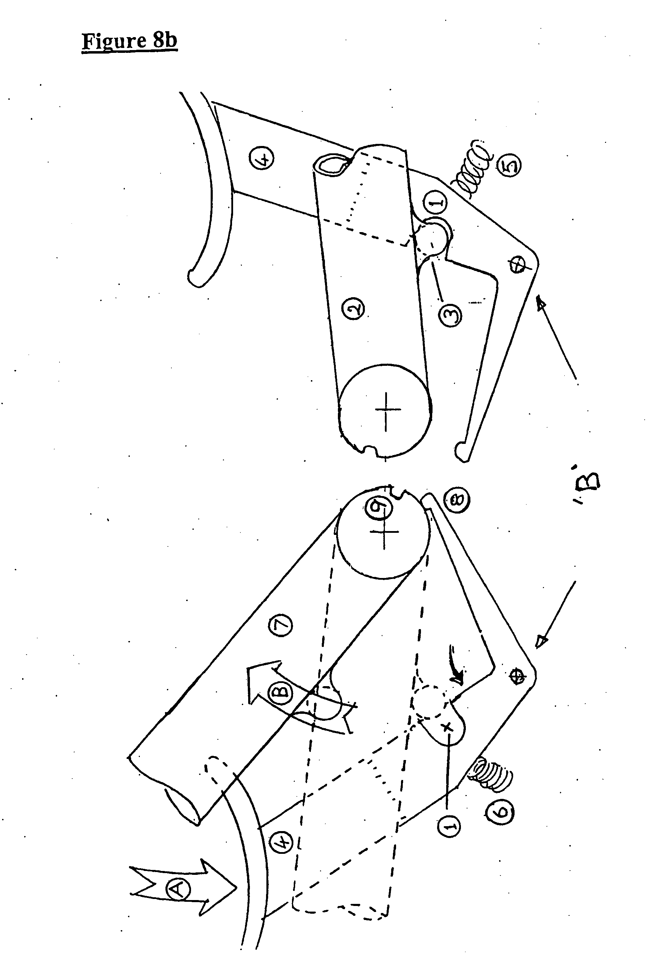

With respect to Figure 8b, there is illustrated a locating spigot attached to the armrest strut 4, which when pivoting at "B" bears against the respective handle 7 acting as a brake thereagainst until the spigot locates in the indented latching groove 9 and secures the handle in that position. The end of the spigot is complementarily configured to match the indented latching groove.

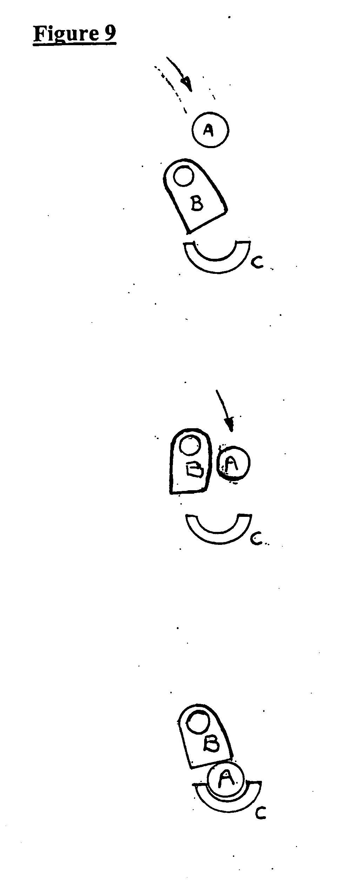

With respect to Figure 9, three stages of the operation of a releasable locking means are illustrated. The releasable locking means operates via a cam to retain the handle portion in a selectable position.

"A" shows the end view of a spigot, or peg, that is an extension affixed to each handle (half handlebar)

"B" represents a cam, or lever, that is affixed to an armrest near its pivot point so that it can rotate with the armrest.

"C" is a representation of a rest position (that may be adjustable), for the spigot A.

The top drawing shows the arc of travel as a spigot A. approaches its releasable lock where the handle is moved from the aero position to the base or wide position by the rider. Cam B. protrudes into its projected path under spring pressure.

The centre drawing shows the spigot A. depressing the cam B as it moves past it.

The lower drawing shows the spigot A. that has reached its rest position C. and is retained firmly in position by the cam B that is urged under spring pressure to bear against it.

To reverse the operation the respective armrest is depressed by the rider, rotating the cam B into the position that is shown in the centre drawing, allowing its associated handle to travel under its own spring pressure to a second position (Aero position).

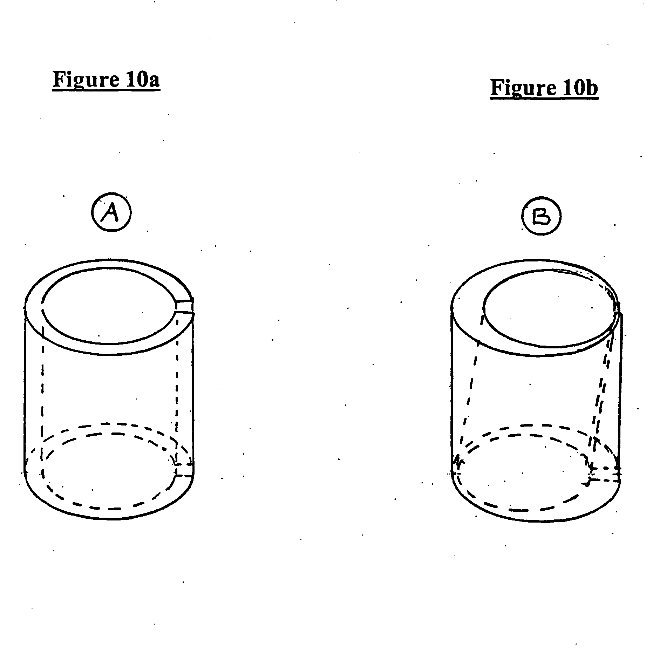

Figure 10 illustrates two split sleeves at Figure 10a and Figure 10b. These split sleeves locate on the steerer tube. Sleeve 10a is concentric in shape to provide a location for the aero position. Sleeve 10b is however, bored at an angle and may be reversed to provide two alternative positions that are either above or below that of Sleeve 10a.

It should be appreciated that the present invention lends itself to providing customised handlebar portions to meet the specific requirements of individual riders. Accordingly, the description herein has provided several examples of how various components of the steering apparatus may have alternative forms/configurations. Nevertheless, it should also be appreciated that variations other than those exampled are possible and would similarly fall within the scope of the present invention.

It is again reiterated that the term "comprise" when used herein is not to be considered to be used in a limiting sense. Accordingly, 'comprise' does not represent nor define an exclusive set of items, but includes the possibility of other components and items being added to the list.

This specification is also based on the understanding of the inventor regarding the prior art. The prior art description should not be regarded as being an authoritative disclosure of the true state of the prior art but rather as referring to considerations in and brought to the mind and attention of the inventor when developing this invention.

Aspects of the present invention have been described by way of example only and it should be appreciated that modifications and additions may be made thereto without departing from the scope thereof, as defined in the appended claims.

## Claims

1. A steering apparatus for control of a vehicle by a rider, including two handlebar portions (2) which are independently transferable between at least an arm rest position and a base position, wherein the handlebar portions (2) include at least one resilience means which is in an extended/loaded configuration when the handlebar portions are in the base position and two arm rests (1) for the riders' forearms in order to place the rider in an arm rest position associated with each of the handlebar portions, **characterised in that** each arm rest is configured such that pressure applied by the rider's forearm to the respective arm rest activates an actuator for the transfer of the respective handlebar portion between the base position and the arm rest position, and the steering apparatus includes a releasable locking means (6) which engage the handlebar portions when in the base position, and release the handlebar portions (2) when the actuators are activated.

2. A steering apparatus for control of a vehicle as claimed in claim 1 wherein the arm rest position is an aero position.

3. 11 steering apparatus for control of a vehicle as claimed in either of claims 1 or 2 wherein each handlebar portion (2) independently pivots around a central point (15).

4. A steering apparatus for control of a vehicle as claimed in claim 1 wherein the resilience means is a spring (5).

5. A steering apparatus for control of a vehicle as claimed in any one of claims 1 to 4 which also includes a releasable locking means (6) which engages the handlebar portions (2) when in the arm rest position, and releases the handlebar portions when the rider removes their arms from the arm rests.

6. A steering apparatus for control of a vehicle as claimed in any one of claims 1 to 5 wherein the vehicle is a bicycle (21).

7. A method of transferring a handlebar portion of a steering apparatus as claimed in claim 1 for control of a vehicle including two handlebar portions (2) between a base position and an arm rest position, said method **characterized by** the steps of:
a) a rider applying pressure to an arm rest (1) for the rider's forearm in order to place the rider in the arm rest position;
b) the pressure applied to the arm rest activating an actuator;
c) activation of the actuator releasing the corresponding handlebar portion from a releasable locked base position enabling the handlebar portion to transfer to the arm rest position.

8. A method of transferring a handlebar portion of a steering apparatus for control of a vehicle including two handlebar portions (2) between a base position and an armrest position as claimed in claim 7 also including the additional step of:
d) repeating steps a) to c) for a second handlebar.

9. A method of transferring a handlebar portion of a steering apparatus for control of a vehicle including two handlebar portions (2) between a base position and an armrest position as claimed in claim 7 wherein the handlebars- portions are transferred from the base position to the arm rest position simultaneously.

10. A method of transferring a handlebar of a steering apparatus as claimed in claim 1 for control of a vehicle including two handlebar portions (2) between an arm rest position and a base position, said method **characterized by** the steps of:
a) a rider removing their arm from an arm rest (1) for the rider's forearm in order to place the rider in the arm rest position;
b) the rider applying pressure to the handlebar portion against the pressure of a resilience means to transfer the handlebar portion to the base position; and
c) the rider maintaining pressure on the handlebar portion until the releaseable lock (6) secures the handlebar portion in the base position.

11. A method of transferring a handlebar portion of a steering apparatus for control of a vehicle including two handlebar portion, (2) between an arm rest position and a base position as claimed in claim 10 also including the additional step of:
d) repeating steps a) to c) for a second handlebar.

12. A method of transferring a handlebar portion of a steering apparatus for control of a vehicle including two handlebar portions (2) between an arm rest position and a base position as claimed in claim 10 wherein the handlebar portions are transferred from the arm rest position to the base position simultaneously.

13. A method of transferring a handlebar portion of a steering apparatus for control of a vehicle including two handlebar portions (2) as claimed in any one of claims 7 to 12 wherein the vehicle is a bicycle (21).

## Patentansprüche

1. Lenkvorrichtung zum Lenken eines Fahrzeugs durch einen Fahrer, die zwei Lenkerteile (2) hat, die unabhängig voneinander zwischen wenigstens einer Annauflageposition und einer Ausgangsposition umstellbar sind, wobei die Lenkerteile (2) wenigstens ein Federungsmittel, das in einer ausgezogenen/gespannten Konfiguration ist, wenn die Lenkerteile in der Ausgangsposition sind, und zwei Armauflagen (1) für die Unterarme des Fahrers, um den Fahrer in eine mit jeder der Lenkerteile assoziierte Armauflageposition zu bringen, aufweisen, **dadurch gekennzeichnet, dass** jede Armauflage so konfiguriert ist, dass von dem Unterarm des Fahrers auf die jeweilige Armauflage ausgeübter Druck einen Stellantrieb für die Umstellung des jeweiligen Lenkerteils zwischen der Ausgangsposition und der Armauflageposition aktiviert, und die Lenkvorrichtung ein auslösbares Sperrmittel (6) aufweist, das in der Ausgangsposition mit den Lenkerteilen in Eingriff ist und die Lenkerteile (2) auslöst, wenn die Stellantriebe aktiviert werden.

2. Lenkvorrichtung zum Lenken eines Fahrzeugs nach Anspruch 1, bei der die Armauflageposition eine Aero-Position ist.

3. Lenkvorrichtung zum Lenken eines Fahrzeugs nach Anspruch 1 oder 2, bei der sich die Lenkerteile (2) jeweils unabhängig voneinander um einen Mittelpunkt (15) drehen.

4. Lenkvorrichtung zum Lenken eines Fahrzeugs nach Anspruch 1, bei der das Federungsmittel eine Feder (5) ist.

5. Lenkvorrichtung zum Lenken eines Fahrzeugs nach einem der Ansprüche 1 bis 4, die auch ein auslösbares Sperrmittel (6) aufweist, das in der Armauflageposition mit den Lenkerteilen (2) in Eingriff ist und die Lenkerteile auslöst, wenn der Fahrer seine Arme von den Armauflagen nimmt.

6. Lenkvorrichtung zum Lenken eines Fahrzeugs nach einem der Ansprüche 1 bis 5, bei der das Fahrzeug ein Fahrrad (21) ist.

7. Verfahren zum Umstellen eines Lenkerteils einer Lenkvorrichtung nach Anspruch 1 zum Lenken eines Fahrzeugs, die zwei Lenkerteile (2) hat, zwischen einer Ausgangsposition und einer Armauflageposition, wobei das Verfahren durch die folgenden Schritte **gekennzeichnet** ist:
a) Ausüben von Druck durch einen Fahrer auf eine Armauflage (1) für den Unterann des Fahrers, um den Fahrer in die Armauflageposition zu bringen,
b) Aktivieren eines Stellantriebs durch den auf die Armauflage ausgeübten Druck,
c) Aktivieren des Stellantriebs, so dass das entsprechende Lenkerteil aus einer auslösbaren arretierten Ausgangsposition ausgelöst wird, wodurch der Lenkerteil zur Umstellung in die Armauflageposition befähigt wird.

8. Verfahren zum Umstellen eines Lenkerteils einer Lenkvorrichtung zum Lenken eines Fahrzeugs, die zwei Lenkerteile (2) hat, zwischen einer Ausgangsposition und einer Armauflageposition nach Anspruch 7, das auch den folgenden zusätzlichen Schritt aufweist:
d) Wiederholen der Schritte a) bis c) für einen zweiten Lenker.

9. Verfahren zum Umstellen eines Lenkerteils einer Lenkvorrichtung zum Lenken eines Fahrzeugs, die zwei Lenkerteile (2) hat, zwischen einer Ausgangsposition und einer Armauflageposition nach Anspruch 7, wobei die Lenkerteile gleichzeitig von der Ausgangsposition in die Armauflageposition umgestellt werden.

10. Verfahren zum Umstellen eines Lenkerteils einer Lenkvorrichtung nach Anspruch 1 zum Lenken eines Fahrzeugs, die zwei Lenkerteile (2) hat, zwischen einer Armauflageposition und einer Ausgangsposition, wobei das genannte Verfahren durch die folgenden Schritte **gekennzeichnet** ist:
a) Abnehmen seines Arms von einer Armauflage (1) für den Unterarm des Fahrers durch einen Fahrer, um den Fahrer in die Armauflageposition zu bringen,
b) Ausüben von Druck durch den Fahrer auf den Lenkerteil gegen den Druck eines Federungsmittels zum Umstellen des Lenkerteils in die Ausgangsposition und
c) Aufrechterhalten des Drucks auf den Lenkerteil durch den Fahrer, bis die auslösbare Sperre (6) den Lenkerteil in der Ausgangsposition befestigt.

11. Verfahren zum Umstellen eines Lenkerteils einer Lenkvorrichtung zum Lenken eines Fahrzeugs, die zwei Lenkerteile (2) hat, zwischen einer Armauflageposition und einer Ausgangsposition nach Anspruch 10, das auch den folgenden zusätzlichen Schritt aufweist:
d) Wiederholen der Schritte a) bis c) für einen zweiten Lenker.

12. Verfahren zum Umstellen eines Lenkerteils einer Lenkvorrichtung zum Lenken eines Fahrzeugs, die zwei Lenkerteile (2) hat, zwischen einer Armauflageposition und einer Ausgangsposition nach Anspruch 10, wobei die Lenkerteile gleichzeitig von der Ausgangsposition in die Armauflageposition umgestellt werden.

13. Verfahren zum Umstellen eines Lenkerteils einer Lenkvorrichtung zum Lenken eines Fahrzeugs, die zwei Lenkerteile (2) hat, nach einem der Ansprüche 7 bis 12, wobei das Fahrzeug ein Fahrrad (21) ist.

## Revendications

1. Dispositif de direction pour permettre à un conducteur de commander un véhicule, incluant deux portions de guidon (2) qui sont aptes à être transférées indépendamment entre au moins une position accoudoir et une position de base, cas dans lequel les portions de guidon (2) comportent au moins un moyen élastique qui se trouve dans une configuration déployée/chargée lorsque les portions de guidon se trouvent dans la position de base et deux accoudoirs (1) pour les avant-bras du conducteur afin de placer le conducteur dans une position accoudoir laquelle est associée à chacune des portions de guidon, **caractérisé en ce que** chaque accoudoir est configuré de sorte qu'une pression exercée par l'avant-bras du conducteur sur l'accoudoir respectif va activer un actionneur pour effectuer le transfert de la portion de guidon respective entre la position de base et la position accoudoir, et le dispositif de direction comporte un moyen de verrouillage libérable (6) lequel s'engage avec les portions de guidon lorsqu'il se trouve dans la position de base, et libère les portions de guidon (2) lorsque les actionneurs sont activés.

2. Dispositif de direction pour commander un véhicule, selon la revendication 1, la position accoudoir se trouvant dans une position aéro.

3. Dispositif de direction pour commander un véhicule, selon la revendication 1 ou bien la revendication 2, chaque portion de guidon (2) pivotant de façon indépendante autour d'un point central (15).

4. Dispositif de direction pour commander un véhicule, selon la revendication 1, le moyen élastique étant un ressort (5)

5. Dispositif de direction pour commander un véhicule, selon l'une quelconque des revendications 1 à 4, qui englobe également un moyen de verrouillage libérable (6) lequel s'engage avec les portions de guidon (2) lorsqu'il se trouve dans la position accoudoir, et libère les portions de guidon lorsque le conducteur enlève ses bras des accoudoirs.

6. Dispositif de direction pour commander un véhicule, selon l'une quelconque des revendications 1 à 5, le véhicule étant une bicyclette (21).

7. Procédé de transfert d'une portion de guidon d'un dispositif de direction selon la revendication 1, pour commander un véhicule, incluant deux portions de guidon (2), entre une position de base et une position accoudoir, ledit procédé étant **caractérisé par** les étapes suivantes :
a) pour un conducteur, d'exercer une pression sur un accoudoir (1) pour l'avant-bras du conducteur afin de placer le conducteur dans la position accoudoir ;
b) la pression exercée sur l'accoudoir active un actionneur ;
c) l'activation de l'actionneur libère la portion de guidon correspondante depuis une position de base verrouillée libérable qui permet à la position de guidon de passer à la position accoudoir.

8. Procédé de transfert d'une portion de guidon d'un dispositif de direction pour commander un véhicule, incluant deux portions de guidon (2), entre une position de base et une position accoudoir, selon la revendication 7, englobant également l'étape supplémentaire consistant à :
d) répéter les étapes a) à c) pour un deuxième guidon.

9. Procédé de transfert d'une portion de guidon d'un dispositif de direction pour commander un véhicule, incluant deux portions de guidon (2), entre une position de base et une position accoudoir, selon la revendication 7, les portions de guidon étant transférées simultanément depuis la position de base vers la position accoudoir.

10. Procédé de transfert d'un guidon d'un dispositif de direction selon la revendication 1, pour commander un véhicule, incluant deux portions de guidon (2), entre une position accoudoir et une position de base, ledit procédé étant **caractérisé par** les étapes suivantes :
a) pour un conducteur, d'enlever son bras d'un accoudoir (1) pour l'avant-bras du conducteur afin de placer le conducteur dans la position accoudoir ;
b) pour un conducteur, d'exercer une pression sur la portion de guidon contre la pression d'un moyen élastique afin de transférer la portion de guidon vers la position de base ; et
c) pour un conducteur, de maintenir une pression sur la portion de guidon jusqu'à ce que le verrouillage libérable (6) fixe la portion de guidon dans la position de base.

11. Procédé de transfert d'une portion de guidon d'un dispositif de direction pour commander un véhicule, incluant deux portions de guidon (2), entre une position accoudoir et une position de base, selon la revendication 10, englobant également l'étape supplémentaire consistant à :
d) répéter les étapes a) à c) pour un deuxième guidon.

12. Procédé de transfert d'une portion de guidon d'un dispositif de direction pour commander un véhicule, incluant deux portions de guidon (2), entre une position accoudoir et une position de base, selon la revendication 10, les portions de guidon étant transférées simultanément depuis la position accoudoir vers la position de base.

13. Procédé de transfert d'une portion de guidon d'un dispositif de direction pour commander un véhicule, incluant deux portions de guidon (2), selon l'une quelconque des revendications 7 à 12, le véhicule étant une bicyclette (21).
